# EUROPEAN PATENT APPLICATION

(11) **EP 3 798 381 A1**
(43) Date of publication of application: **31.03.2021**
(21) Application number: 19860807.7
(22) Date of filing: 09.08.2019
(51) Int. Cl.: E04D 13/00, E04B 1/98, E04H 9/02

(54) **ROOF GREENING, WIND BREAKING AND VIBRATION SUPPRESSING APPARATUS, AND BUILDING**

(30) Priority: 12.09.2018 CN 201821493647 U
(71) Applicant: Liu, Rongzhang, Shenzhen, Guangdong 518000 (CN)
(72) Inventor: Liu, Rongzhang, Shenzhen, Guangdong 518000 (CN)
(74) Representative: Vitina, Maruta
(86) International application number: PCT/CN2019/099881
(87) International publication number: WO 2020/052386

(57) **Abstract**

A roof greening, wind breaking and vibration suppressing apparatus, and a building. The roof greening, wind breaking and vibration suppressing apparatus comprises a plant container (11) and a buffering device (20).The buffering device (20) comprises elastic vibration isolation components (21) and damping buffer components (22). Soil (12), water (14), fertilizers (13), a plant and the plant container (11) constitute an inertial body (10). The inertial body (10), the elastic vibration isolation components (21), and the damping buffer components (22) constitute a system mounted on a building. When an earthquake and strong wind strike, the inertial body (10) moves with respect to the building under the action of inertia, each elastic vibration isolation component (21) and each damping buffer component (22) absorb energy and achieve the effect of vibration isolation, passive energy dissipation or tuned vibration absorption, thereby enhancing the earthquake resistance and wind-breaking capability of the building, and expanding the conventional roof greening function.

## Description

### CROSS-REFERENCE TO RELATED APPLICATIONS

This application claims priority to Chinese Patent Application No. 201821493647.2 with a filing date of Sept. 12, 2018 and application title of "a roof greening, wind breaking and vibration suppressing apparatus and a building". The content of the aforementioned application is incorporated herein by reference.

### TECHNICAL FIELD

The present application belongs to the technical field of greening, wind breaking and earthquake resistance of buildings, and particularly relates to a roof greening, wind breaking and vibration suppressing apparatus, and a building.

### BACKGROUND OF THE PRESENT INVENTION

With the increasing awareness of environmental protection and pursuit of better life, people combine buildings with green plants. In modern buildings, the greening of buildings (usually called roof greening) is usually emphasized, and the combination of buildings and green plants can significantly reduce the heat island effect of cities and effectively improve the quality of the living environment of residents. The roof greening can effectively increase the urban greening coverage, create aerial landscapes and improve the environmental quality.

One of important modes of the roof greening is to build flower ponds on the roof and grow the green plants in the flower ponds to form an aerial garden. At present, the function of the flower ponds on the roof is only to realize the roof greening. The function is relatively single. The prior art also lacks the in-depth exploration for the potential functionality of the flower ponds on the roof.

### SUMMARY OF THE PRESENT INVENTION

### Technical Problems

The purposes of embodiments of the present application are as follows: in a first aspect, a roof greening, wind breaking and vibration suppressing apparatus is provided, which is used to solve the technical problem in the prior art that a roof flower pond can only realize the roof greening and is relatively single in function.

In a second aspect, a building is provided, which is used to solve the technical problems of wind breaking and earthquake resistance of the building in the prior art.

### Technical Solutions:

To solve the above technical problems, the embodiments of the present application adopt the following technical solutions:
In a first aspect, a roof greening, wind breaking and vibration suppressing apparatus is provided, which includes a plant container for containing a plant and a buffering device for wind breaking and vibration suppressing. The buffering device includes a plurality of elastic vibration isolation components mounted on an external roof terrace and a plurality of damping buffer components mounted on an external roof wall. Each of the elastic vibration isolation components is fixed on the plant container.

Further, the plant is an aquatic plant. Soil is located on the bottom of the plant container. Water is located above the soil. Roots of the aquatic plant grow in the soil. Stems and leaves of the aquatic plant grow in the water.

Further, each of the elastic vibration isolation components is a metal elastic vibration isolation component.

Or each of the elastic vibration isolation components is an air spring isolation component.

Or each of the elastic vibration isolation components is a rubber and plastic inner elastic isolation component.

Or each of the elastic vibration isolation components is a magnetic spring isolation component.

Or each of the elastic vibration isolation components is a composite material elastic isolation component.

Or each of the elastic vibration isolation component is the above two or more composite elastic isolation components.

Further, each of the elastic vibration isolation components is a dry friction damping vibration absorber.

Further, the dry friction damping vibration absorber includes an elastic element and a friction couple component. Two ends of the elastic element and two ends of the friction couple component are respectively mounted on the lower end of the plant container and the roof terrace. The elastic element and the friction couple component are kept in parallel in an axial direction.

Further, each of the damping buffer components is a viscous liquid energy dissipation damper.

Or each of the damping buffer components is a metal energy dissipation damper.

Or each of the damping buffer components is a viscous elastic energy dissipation damper.

Or each of the damping buffer components is an inner friction energy dissipation damper.

Or each of the damping buffer components is a magnetofluid variable-resistance energy dissipation damper.

Or each of the damping buffer components is the above two or more energy dissipation dampers.

Further, each of the buffering devices is a general rubber vibration isolation bearing which integrates an elastic vibration isolation function and a damping buffer function.

Or each of the buffering devices is a high damping rubber vibration isolation bearing.

Or each of the buffering devices is a lead rubber vibration isolation bearing.

Or each of the buffering devices is the above two or more compound rubber vibration isolation bearings.

Further, each of the elastic vibration isolation components is connected with the plant container. Each of the damping buffer components is connected with the plant container.

Further, each of the damping buffer components and each of the elastic vibration isolation components are connected to an outer peripheral side wall of the plant container in a uniform divergence manner by taking the center of the plant container as the center of a circle.

Further, the plant container is provided with a cavity for containing soil, fertilizers, water and the plant. The soil, the fertilizers, the water, the plant and the plant container jointly constitute an inertial body.

Further, each of the elastic vibration isolation components, each of the damping buffer components and the inertial body jointly constitute a wind breaking and earthquake resistance system.

Further, the inertial body, the elastic vibration isolation components and the damping buffer components jointly constitute a complex vibration absorption system.

Further, the buffering device also includes a plurality of omnidirectional mobile components. Each of the omnidirectional mobile components is mounted at the lower end of the plant container.

In a second aspect, a building is provided. A roof of the building is provided with a plurality of roof greening, wind breaking and vibration suppressing apparatuses.

Further, a plurality of elastic vibration isolation components and a plurality of damping buffer components are fixed on furniture and electric equipment in the building.

### Beneficial Effects

Compared with the prior art, the roof greening, wind breaking and vibration suppressing apparatus provided by the embodiments of the present application plants or contains a greening plant in the plant container, so that the roof greening of the building is first realized, thereby adding the greenery for the building. Since the plant container is provided with a plurality of elastic vibration isolation components and a plurality of damping buffer components, when the building swings under the impact of strong wind and seismic waves (seismic transverse waves, seismic longitudinal waves and seismic surface waves), the plant container moves with respect to the building under the action of inertia, and a plurality of elastic vibration isolation components and a plurality of damping buffer components absorb and dissipate the energy transferred to the building by the strong wind and the seismic transverse waves, longitudinal waves and surface waves. Thus, the tilting and swinging amplitude of the building is significantly reduced, so that an overground part of the building is kept stable with respect to a ground base part. Meanwhile, the soil, the water and the plant in the plant container jointly constitute an inertial body with a certain mass. The larger the mass of the inertial body is, the stronger the earthquake and wind energy absorption capability is. The inertial body, the elastic vibration isolation components and the damping buffer components are configured with reasonable performance parameters to constitute a system which is mounted on the building, which can achieve an effect of vibration isolation, passive energy dissipation or tuned vibration absorption under the action of the earthquake and the wind, thereby enhancing the earthquake resistance and wind-breaking capability of the building. The traditional roof greening apparatus may increase the bearing weight of the building, thereby increasing the danger of the building. The roof greening, wind breaking and vibration suppressing apparatus of the present application realizes the deep expansion of the traditional roof greening function. With the increase of the total mass of the inertial body, the elastic vibration isolation components and the damping buffer components, the load on the building may increase correspondingly, but the inertial body, the elastic vibration isolation components and the damping buffer components constitute the system, which can achieve a better wind-breaking and earthquake resistance effect. The positive effect (enhancing the safety of the building) of the increase of the total mass of the inertial body, the elastic vibration isolation components and the damping buffer components is far greater than its negative effect (increasing the danger of the building).

The building provided by the embodiments of the present application has the beneficial effects: since the roof of the building provided by the embodiments of the present application is provided with a plurality of roof greening, wind breaking and vibration suppressing apparatuses, when the building suffers the earthquake or the strong wind, the roof greening, wind breaking and vibration suppressing apparatus can effectively suppress the impact of the seismic transverse waves and the strong wind swing on the overground part of the building, thereby significantly reducing the swinging amplitude of the building, effectively reducing the damage of the seismic transverse waves, surface waves and longitudinal waves and the strong wind to the building, and enhancing the survival and well-preserving capability of the building in the earthquake and the strong wind. Because the roof of the building has a plurality of roof greening, wind breaking and vibration suppressing apparatuses, the building has good wind resistance and earthquake resistance, and also has the environmentally friendly advantages of beautifying the city, conditioning the air, reducing the heat island effect of the city and the like.

### BRIEF DESCRIPTION OF THE DRAWINGS

Fig. 1 is a structural schematic diagram of an inertial body, damping buffer components and elastic vibration isolation components of a roof greening, wind breaking and vibration suppressing apparatus provided by embodiments of the present application;
Fig. 2 is a structural schematic diagram I of a buffering device and a plant container of the roof greening, wind breaking and vibration suppressing apparatus provided by the embodiments of the present application;
Fig. 3 is a structural schematic diagram of the plant container containing a land plant of the roof greening, wind breaking and vibration suppressing apparatus provided by the embodiments of the present application;
Fig. 4 is a structural schematic diagram of the plant container containing an aquatic plant of the roof greening, wind breaking and vibration suppressing apparatus provided by the embodiments of the present application;
Fig. 5 is a structural schematic diagram II of the buffering device and the plant container of the roof greening, wind breaking and vibration suppressing apparatus provided by the embodiments of the present application;
Fig. 6 is a structural schematic diagram of a complex vibration absorption structure of the roof greening, wind breaking and vibration suppressing apparatus provided by the embodiments of the present application; and
Fig. 7 is a structural schematic diagram of an omnidirectional mobile component and the buffering device of the roof greening, wind breaking and vibration suppressing apparatus provided by the embodiments of the present application.

### Reference numerals in the drawings:

10-Inertial body; 11-plant container; 12-soil
13-Fertilizer; 14-water; 15-land plant
16-Aquatic plant; 17-omnidirectional mobile component; 20-buffering device
21-Elastic vibration isolation component; 22-damping buffer component; 30-building
31-Roof terrace; 32-vibration absorption and earthquake resistance component; 40-ground base

### DETAILED DESCRIPTION OF THE PRESENT INVENTION

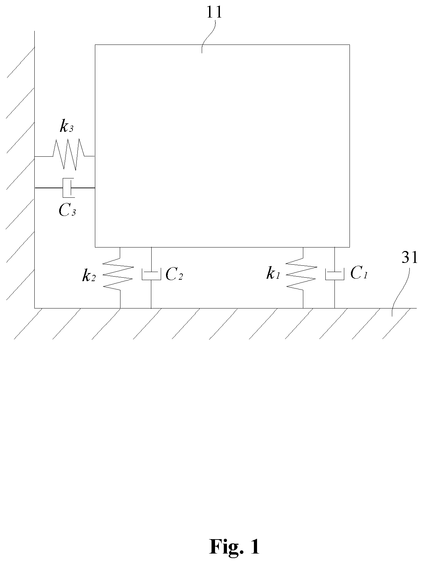

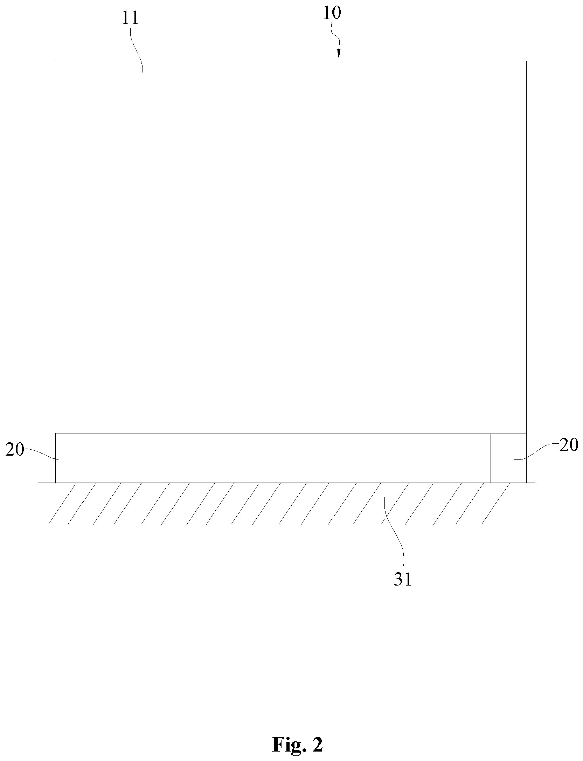

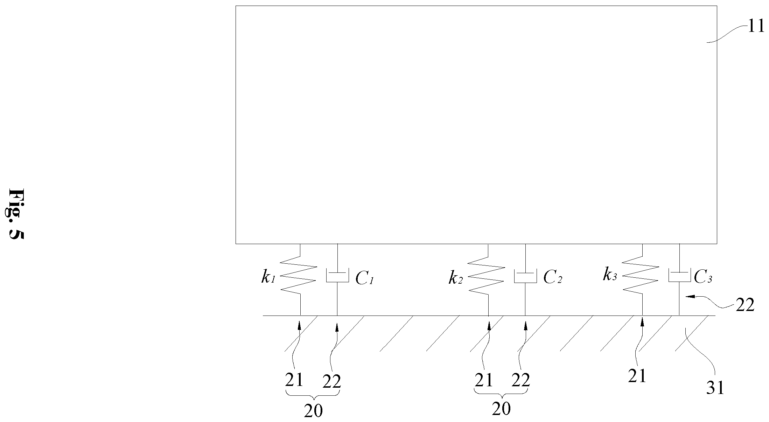

Embodiments of the present application are described below in detail. Examples of the embodiments are shown in the drawings, wherein same or similar reference numerals indicate the same or similar elements or elements having the same or similar functions. The embodiments described below with reference to the Figs. 1-7 are exemplary and are intended to explain the present application, but should not be understood as limitations to the present application.

In the description of the present application, it should be noted that the terms "length", "width", "upper," "lower," "front," "rear," "left," "right" , "vertical", "horizontal", "top", "bottom", "inside", "outside", and the like which indicate the orientation or positional relationship are based on the orientation or positional relationship shown in the drawings, and are only used for convenience in describing the present application and simplifying the description, rather than indicating or implying that specific devices or elements must have a specific orientation and must be constructed and operated in a specific orientation. Therefore, the terms shall not be understood as limitations to the present application.

In addition, terms "first" and "second" are only for the purpose of description, and shall not be understood as indicating or implying relative importance or implicitly indicating the number of indicated technical features. Therefore, features defined with "first" and "second" may explicitly or implicitly include one or more of the features. In the description of the present application, "a plurality of' means two or more, unless otherwise specified.

In present application, unless otherwise clearly defined and limited, the terms "mount", "connected", "connection", "fixed" and the like should be understood in a broad sense, for example, it can be a fixed connection, a detachable connection, or an integral connection; it can be a mechanical connection or an electrical connection; and it can be a direct connection or an indirect connection through an intermediate medium, and can also be an internal communication of two elements or an interaction relationship of two elements. For those ordinary skilled in the art, the specific meanings of the above-mentioned terms in the present application can be understood according to specific circumstances.

As shown in Figs. 1-3, a roof greening, wind breaking and vibration suppressing apparatus provided by embodiments of the present application includes a plant container 11 for containing a plant and a buffering device 20 for wind breaking and vibration suppressing; and the buffering device 20 includes a plurality of elastic vibration isolation components 21 mounted on an external roof terrace 31 and a plurality of damping buffer components 22 mounted on an external roof wall. Each elastic vibration isolation component 21 is fixed on the plant container 11. Each damping buffer component 22 is fixed on the plant container 11. Letter references k₁-k₈ all represent the elastic vibration isolation components 21, and letter references C₁-C₈ all represent the damping buffer components 22.

The roof greening, wind breaking and vibration suppressing apparatus provided by the embodiments of the present application plants or contains a greening plant 15 in the plant container 11, so that the roof greening of the building 30 can be first realized, thereby adding the greenery for the building 30. Since the plant container 11 is provided with a plurality of elastic vibration isolation components 21 and damping buffer components 22, when the building 30 swings under the impact of strong wind and seismic waves (seismic transverse waves, seismic longitudinal waves and seismic surface waves), an inertial body 10 of the plant container moves with respect to the building 30 under the action of inertia; and under the combined effect of the damping buffer components 22 and the elastic vibration isolation components 21, the energy transferred to the building by the strong wind and the seismic transverse waves, longitudinal waves and surface waves can be absorbed and dissipated. Thus, the tilting and swinging amplitude of the building 30 is significantly reduced, so that an overground part of the building 30 is kept stable with respect to a ground base 40 part. The larger the mass of the inertial body 10 is, the stronger the earthquake and wind energy absorption capability is. Meanwhile, soil 12, water 14 and the plant in the plant container 11 jointly constitute an inertial body 10 with a certain mass. The inertial body 10, the elastic vibration isolation components 21 and the damping buffer components 22 are configured with reasonable performance parameters to prevent the occurrence of resonance and to constitute a system which is mounted on the building 30. When the earthquake occurs or the wind strikes, the system not only can achieve the effect of vibration isolation, passive energy dissipation or tuned vibration absorption, but also can enhance the earthquake resistance and wind-breaking capability of the building 30. The traditional roof greening apparatus may increase the bearing weight of the building, thereby increasing the danger of the building. The roof greening, wind breaking and vibration suppressing apparatus of the present application realizes the deep expansion of the traditional roof greening function. With the increase of the total mass of the inertial body, the elastic vibration isolation components and the damping buffer components, the load on the building may increase correspondingly, but the inertial body, the elastic vibration isolation components and the damping buffer components constitute the system which can achieve a better wind-breaking and earthquake resistance effect. The positive effect (enhancing the safety of the building) of the increase of the total mass of the inertial body, the elastic vibration isolation components and the damping buffer components is far greater than its negative effect (increasing the danger of the building). At the same time, under the support of the damping buffer components 22 and the elastic vibration isolation components 21, the plant container 11 can also be stably arranged on the roof, so that the plant container 11 is prevented from being blown away or shocked away from the roof under the action of the strong wind or the seismic waves, thereby effectively protecting the plant container 11 and the green plant in the plant container 11, and preventing the dropping of the plant container or the plant in the plant container from the building 30 and injuring passerby. Thus, the roof greening, wind breaking and vibration suppressing apparatus provided by the embodiments of the present application realizes the deep expansion of the traditional roof greening function.

In one embodiment, each elastic vibration isolation component 21 is a metal elastic vibration isolation component (the specific structure is not shown, and only the schematic diagram is shown); or each elastic vibration isolation component 21 is a rubber and plastic inner elastic isolation component (not shown); or each elastic vibration isolation component 21 is an air spring isolation component (not shown); or each elastic vibration isolation component 21 is a magnetic spring isolation component (not shown); or each elastic vibration isolation component 21 is a composite material elastic isolation component (not shown); or each elastic vibration isolation component 21 is the above two or more composite elastic isolation components (not shown). Specifically, each elastic vibration isolation component 21 may be formed by combining one or more elastic components. The elastic components can all realize the elastic vibration absorption and buffering in the vertical direction and the horizontal direction. For example, the rubber and plastic inner elastic isolation component can realize the elastic vibration absorption and buffering in a three-dimensional space of the vertical direction and the horizontal plane through the elastic deformation. The elastic buffering principle of the other above elastic components is not repeated herein. Because most of the above elastic components are relatively low in manufacturing cost, the roof greening, wind breaking and vibration suppressing apparatus provided by the embodiments of the present application is relatively low in manufacturing cost.

When the strong wind or longitudinal waves, transverse waves and surface waves generated by the earthquake occur, the above elastic components can buffer the impact of the seismic longitudinal waves, the strong wind and the seismic transverse waves through the composite elastic deformation in the vertical direction and the horizontal direction.

Optionally, each elastic vibration isolation component 21 may also be a dry friction damping vibration absorber (not shown); the dry friction damping vibration absorber includes an elastic element and a friction couple component; and two ends of the elastic element are respectively mounted on the lower end of the plant container 11 and the roof terrace 31. Two opposite ends of the friction couple component are respectively mounted on the lower end of the plant container 11 and the roof terrace 31, and the elastic element and the friction couple component are kept in parallel in an axial direction. Therefore, the combined action of the elastic element and the friction couple component not only realizes a friction damping function of each elastic vibration isolation component 21, but also realizes a longitudinal vibration isolation and vibration absorption function between the plant container 11 and a main body of the building 30. Each elastic vibration isolation component 21 may also be a liquid damping vibration absorber. The liquid damping vibration absorber includes an elastic element and a hydraulic component. Two ends of the elastic element are respectively mounted on the lower end of the plant container 11 and the roof terrace 31. Two opposite ends of the hydraulic component are respectively mounted on the lower end of the plant container 11 and the roof terrace 31. The elastic element and the hydraulic component are kept in parallel in the axial direction. In this way, benefited from the advantages of the liquid damping vibration absorber such as low manufacturing cost and simple maintenance, the overall manufacturing cost of the roof greening, wind breaking and vibration suppressing apparatus can also be reduced. Each elastic vibration isolation component 21 may also be an air damping vibration absorber. Benefited from the characteristics of the air damping vibration absorber such as high vibration isolation efficiency, small volume and easy mounting, the air damping vibration absorber is suitable for a mounting station with a small assembling space, and the vibration isolation capability of the roof greening, wind breaking and vibration suppressing apparatus can also be significantly enhanced. Of course, according to the actual situation, each elastic vibration isolation component 21 may also select a rubber damping vibration absorber and the like.

In one embodiment, each damping buffer component is a viscous liquid energy dissipation damper (not shown); or each damping buffer component is a metal energy dissipation damper (not shown); or each damping buffer component is a viscous elastic energy dissipation damper (not shown); or each damping buffer component is an inner friction energy dissipation damper (not shown); or each damping buffer component is a magnetofluid variable-resistance energy dissipation damper (not shown; or each damping buffer component is the above two or more energy dissipation dampers (not shown). Specifically, each damping buffer component is defined as the above one or more vibration absorption components, so that when the strong wind or the transverse waves and surface waves generated by the earthquake occur, the vibration absorption components can buffer the impact of the strong wind and the seismic transverse waves through the composite elastic deformation in the vertical direction and the horizontal direction.

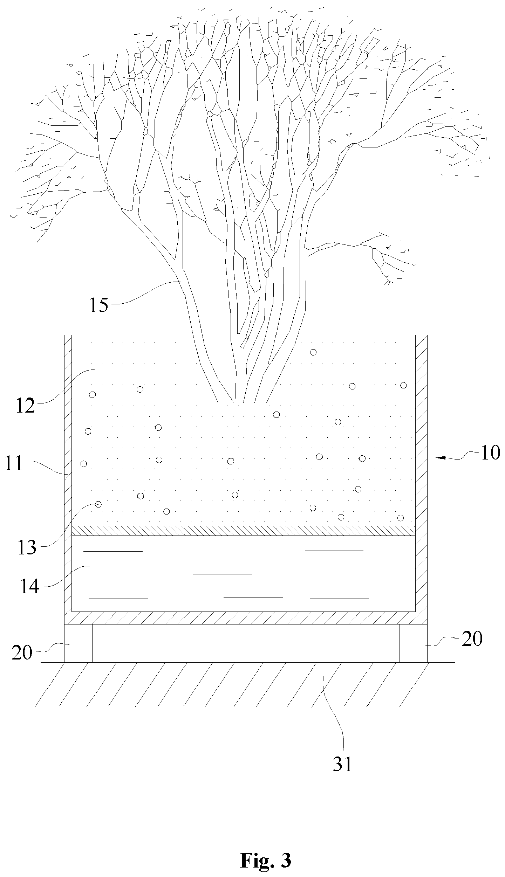

In one embodiment, as shown in Figs. 3-5, a buffering end of each elastic vibration isolation component 21 is connected with the lower end of the plant container 11. Specifically, when the building 30 is struck by the seismic longitudinal waves, the seismic transverse waves, the seismic surface waves and the strong wind, the inertial body 10 moves with respect to the building 30 under the action of the inertia. A plurality of elastic vibration isolation components 21 and damping buffer components 22 absorb and dissipate the energy of the building 30 for the seismic longitudinal waves, the seismic transverse waves, the seismic surface waves and the strong wind, thereby enhancing the resistance capability of the building under the combined action in the vertical direction and horizontal direction. Meanwhile, the buffering end of each elastic vibration isolation component 21 can be mounted on the lower end surface of the plant container 11 and can also be mounted on the side wall of the lower end of the plant container 11, which is not limited in the present embodiment.

In one embodiment, as shown in Figs. 1-3, each buffering device is a general rubber vibration isolation bearing which integrates an elastic vibration isolation function and a damping buffer function; or each buffering device is a high damping rubber vibration isolation bearing; or each buffering device is a lead rubber vibration isolation bearing; or each buffering device is the above two or more compound rubber vibration isolation bearings. Specifically, the buffering device is configured as the rubber vibration isolation bearing which integrates the elastic vibration isolation function and the damping buffer function, so that the above rubber vibration isolation bearing realizes the double functions of energy absorption and dissipation of the elastic vibration isolation components 21 and the damping buffer components 22.

In one embodiment, as shown in Figs. 1-3, each elastic vibration isolation component is connected with the plant container. Each damping buffer component is connected with the plant container. Specifically, each elastic vibration isolation component and each damping buffer component are connected with the plant container at a paired interval so as to absorb and dissipate the energy of the building. Each damping buffer component and each elastic vibration isolation component can be connected to an outer peripheral side wall of the plant container in a uniform divergence manner by taking the center of the plant container as the center of a circle, so that each damping buffer component and each elastic vibration isolation component can be ensured to absorb and dissipate the energy transferred to the building 30 by the seismic waves and the strong wind in various directions of the horizontal plane.

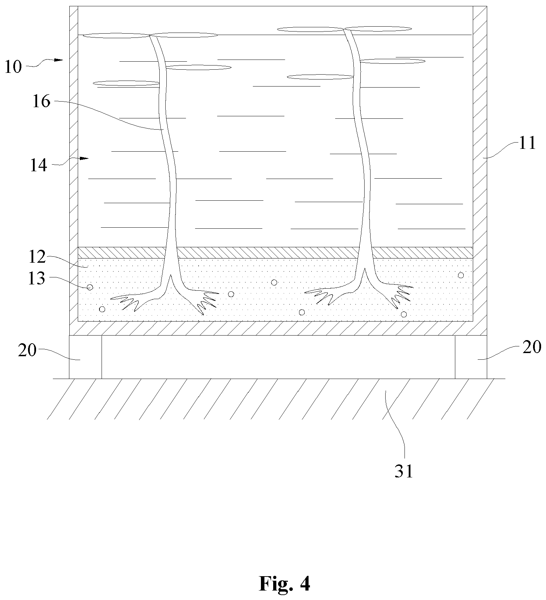

In one embodiment, as shown in Fig. 3 and Fig. 4, the plant container 11 is provided with a cavity (not shown) inside for containing soil 12, fertilizers 13, water 14 and a plant. The soil 12, the fertilizers 13, the water 14, the plant and the plant container 11 jointly constitute an inertial body 10. Specifically, the plant may be a land plant 15 or an aquatic plant 16. When the plant is the land plant 15, branches and leaves of the land plant 15 can play a role of damping the tilting and swinging of the building under the action of the seismic waves or the strong wind.

As shown in Fig. 3, when the aquatic plant 16 (such as water lily) is planted or contained in the plant container 11, the bottom of the plant container 11 contains the soil 12. The plant container is fully filled the water 14 above the soil 12. Roots of the aquatic plant 16 grow in the soil 12, and stems and leaves of the aquatic plant 16 grow in the water 14, so that the aquatic plant 16 can be contained stably in the plant container 11. Meanwhile, since the plant container 11 contains the water 14, when the building 30 is under the acting force of the strong wind, the seismic transverse waves and the seismic surface waves in the horizontal direction, the water 14 contained in the plant container 11 flows with respect to the plant container 11 due to dual characteristics of the water 14 such as inertia and fluidity. The stems and the leaves of the aquatic plant 16 growing in the water 14 have viscous damping effects with the water 14, thereby suppressing the tilting and swinging amplitude of the building 30.

In this way, the inertial body 10 jointly constituted by the water 14, the soil 12 and the aquatic plant 16 in the plant container 11 moves with respect to the building 30 under the action of inertia and cooperates with the elastic vibration isolation components 21 and the damping buffer components 22 of the buffering device 20 to dually buffer and suppress the vibration and absorb and dissipate the energy transferred to the building 30 by the seismic waves and/or the strong wind, thereby reducing and suppressing the tilting and swinging amplitude of the building 30.

In one embodiment, as shown in Fig. 3, Fig. 4 and Fig. 5, each elastic vibration isolation component 21, each damping buffer component 22 and the inertial body 10 jointly constitute a wind breaking and earthquake resistance system. Specifically, when the building 30 faces the action of the strong wind and the seismic waves, each elastic vibration isolation component 21, each damping buffer component 22 and the inertial body 10 can act together. The buffer damping effect of each elastic vibration isolation component 21 and each damping buffer component 22 and the inertia effect of the inertial body 10 are used to jointly achieve the suppression of the shaking and vibration amplitudes of the building 30, thereby guaranteeing the safety of the building 30 when facing the strong wind and the earthquake.

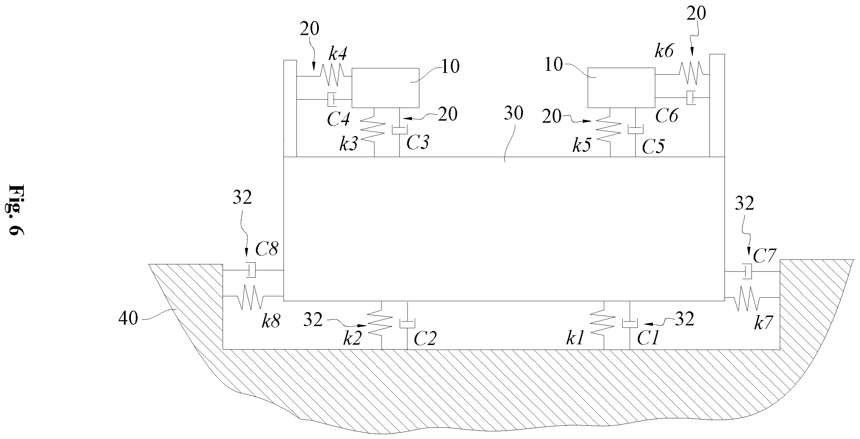

As shown in Fig. 6, various inertial bodies 10, elastic vibration isolation components 21 and damping buffer components 22 constitute various systems which are mounted on the same building 30 at the same time, thereby finally constituting a complex vibration absorption system. Through the reasonable distribution and optimized design of resonance frequencies of the various systems, a vibration absorption effect in a broader frequency band can be obtained, thereby better protecting the building 30.

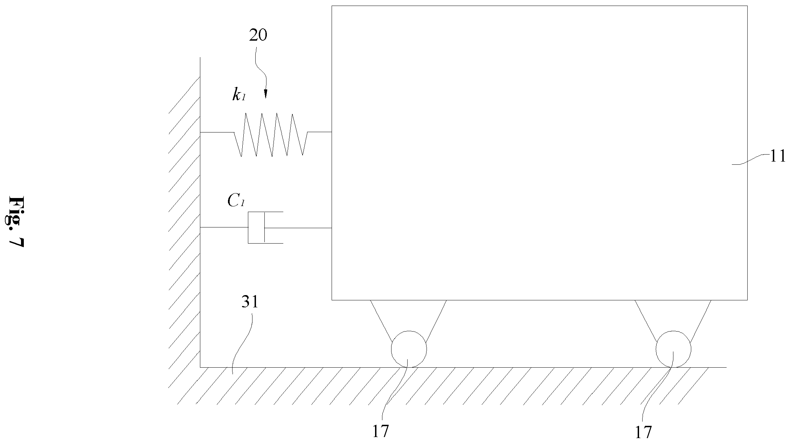

In one embodiment, as shown in Fig. 7, the buffering device 20 also includes a plurality of omnidirectional mobile components 17. Each omnidirectional mobile component 17 is mounted at the lower end of a container body. Specifically, the bottom of the container body is provided with a plurality of omnidirectional mobile components 17, so that when the container body slides with respect to the roof of the building 30 under the action of inertia, the omnidirectional mobile components 17 cooperate with each elastic vibration isolation component 21 and each damping buffer component 22 to realize the buffering effect of the container body of the roof greening, wind breaking and vibration suppressing apparatus on the tilting and swinging of the building caused by the seismic transverse waves or the strong wind when the earthquake or the strong wind strikes.

Embodiments of the present application also provide a building 30. A roof of the building 30 is provided with a plurality of roof greening, wind breaking and vibration suppressing apparatuses.

In the building 30 provided by the present application, since the roof of the building is provided with a plurality of roof greening, wind breaking and vibration suppressing apparatuses, when the building 30 faces the earthquake or the strong wind, the roof greening, wind breaking and vibration suppressing apparatuses can effectively suppress the impact of the seismic transverse waves and the strong wind swing on the overground part of the building 30, thereby significantly reducing the swinging amplitude of the building 30, effectively reducing the damage of the seismic transverse waves to the building 30, and enhancing the survival and well-preserving capability of the building 30 in the earthquake and the strong wind. Because the roof of the building 30 has a plurality of roof greening, wind breaking and vibration suppressing apparatuses, the building 30 has good wind resistance and earthquake resistance, and also has the environmentally friendly advantages of beautifying the city, conditioning the air, reducing the heat island effect of the city and the like. Further, the lower end of the building 30 can be provided with a vibration absorption and earthquake resistance component 32 connected with a ground base 40.

According to the spirit and principle of the present application, a plurality of elastic vibration isolation components and a plurality of damping buffer components can be fixed on facilities such as furniture, electric equipment and the like in the building 30, thereby expanding the vibration absorption and earthquake resistance function of the facilities such as the furniture, electric equipment and the like for the building 30.

The above only describes preferred embodiments of the present application and is not intended to limit the present application. Any modifications, equivalent substitution and improvements made within the spirit and principles of the present application shall be contained within the protection scope of the present application.

## Claims

1. A roof greening, wind breaking and vibration suppressing apparatus, comprising a plant container for containing a plant and a buffering device for wind breaking and vibration suppressing, wherein the buffering device comprises a plurality of elastic vibration isolation components mounted on an external roof terrace and a plurality of damping buffer components mounted on an external roof wall, and each of the elastic vibration isolation components is fixed on the plant container.

2. The roof greening, wind breaking and vibration suppressing apparatus according to claim 1, wherein the plant is an aquatic plant; soil is located on the bottom of the plant container; water is located above the soil; roots of the aquatic plant grow in the soil; and stems and leaves of the aquatic plant grow in the water.

3. The roof greening, wind breaking and vibration suppressing apparatus according to claim 1, wherein each of the elastic vibration isolation components is a metal elastic vibration isolation component;
or each of the elastic vibration isolation components is an air spring isolation component;
or each of the elastic vibration isolation components is a rubber and plastic inner elastic isolation component;
or each of the elastic vibration isolation components is a magnetic spring isolation component;
or each of the elastic vibration isolation components is a composite elastic isolation component;
or each of the elastic vibration isolation components is the above two or more composite elastic isolation components.

4. The roof greening, wind breaking and vibration suppressing apparatus according to claim 1, wherein each of the elastic vibration isolation components is a dry friction damping vibration absorber.

5. The roof greening, wind breaking and vibration suppressing apparatus according to claim 4, wherein the dry friction damping vibration absorber comprises an elastic element and a friction couple component; two ends of the elastic element and two ends of the friction couple component are respectively mounted on the lower end of the plant container and the roof terrace; and the elastic element and the friction couple component are kept in parallel in an axial direction.

6. The roof greening, wind breaking and vibration suppressing apparatus according to claim 1, wherein each of the damping buffer components is a viscous liquid energy dissipation damper;
or each of the damping buffer components is a metal energy dissipation damper;
or each of the damping buffer components is a viscous elastic energy dissipation damper;
or each of the damping buffer components is an inner friction energy dissipation damper;
or each of the damping buffer components is a magnetofluid variable-resistance energy dissipation damper;
or each of the damping buffer components is the above two or more energy dissipation dampers.

7. The roof greening, wind breaking and vibration suppressing apparatus according to claim 1, wherein each of the buffering devices is a general rubber vibration isolation bearing which integrates an elastic vibration isolation function and a damping buffer function;
or each of the buffering devices is a high damping rubber vibration isolation bearing;
or each of the buffering devices is a lead rubber vibration isolation bearing;
or each of the buffering devices is the above two or more compound rubber vibration isolation bearings.

8. The roof greening, wind breaking and vibration suppressing apparatus according to claim 1, wherein each of the elastic vibration isolation components is connected with the plant container; and each of the damping buffer components is connected with the plant container.

9. The roof greening, wind breaking and vibration suppressing apparatus according to claim 1, wherein each of the damping buffer components and each of the elastic vibration isolation components are connected to an outer peripheral side wall of the plant container in a uniform divergence manner by taking the center of the plant container as the center of a circle.

10. The roof greening, wind breaking and vibration suppressing apparatus according to claim 1, wherein the plant container is provided with a cavity for containing the soil, fertilizers, the water and the plant, and the soil, the fertilizers, the water, the plant and the plant container jointly constitute an inertial body.

11. The roof greening, wind breaking and vibration suppressing apparatus according to claim 10, wherein each of the elastic vibration isolation components, each of the damping buffer components and the inertial body jointly constitute a wind breaking and earthquake resistance system.

12. The roof greening, wind breaking and vibration suppressing apparatus according to claim 10, wherein the inertial body, the elastic vibration isolation components and the damping buffer components jointly constitute a complex vibration absorption system.

13. The roof greening, wind breaking and vibration suppressing apparatus according to claim 1, wherein the buffering device also comprises a plurality of omnidirectional mobile components, and each of the omnidirectional mobile components is mounted at the lower end of the plant container.

14. A building, wherein a roof of the building is provided with a plurality of roof greening, wind breaking and vibration suppressing apparatuses of claim 1.

15. The building according to claim 14, wherein a plurality of elastic vibration isolation components and a plurality of damping buffer components are fixed on furniture and electric equipment in the building.
